# EUROPÄISCHE PATENTSCHRIFT

(11) **EP 1 817 515 B1**
(45) Veröffentlichungstag und Bekanntmachung des Hinweises auf die Patenterteilung: **11.01.2012**
(21) Anmeldenummer: 05810328.4
(22) Anmeldetag: 11.11.2005
(51) Int. Cl.: F16H 63/18

(54) **AKTUATORANORDNUNG MIT SCHALTWALZEN FÜR EIN DOPPELKUPPLUNGSGETRIEBE**
ACTUATOR ARRANGEMENT WITH SELECTOR DRUM FOR A DOUBLE-CLUTCH GEARBOX
ENSEMBLE ACTIONNEUR AVEC COMMUTATEURS A CAMES POUR UNE BOITE DE VITESSES A EMBRAYAGE DOUBLE

(30) Priorität: 23.11.2004 DE 102004058475
(43) Veröffentlichungstag der Anmeldung: 15.08.2007
(73) Patentinhaber: GETRAG Getriebe- und Zahnradfabrik Hermann Hagenmeyer GmbH & Cie KG, 74199 Untergruppenbach (DE)
(72) Erfinder: KAPP, Stefan, 74399 Walheim (DE); SCHAARSCHMIDT, Reinhard, 75428 Illingen (DE); BURGARDT, Georg, 74626 Bretzfeld (DE); EPPLER, Oliver, 78112 St. Georgen (DE)
(74) Vertreter: Steil, Christian
(86) Internationale Anmeldenummer: PCT/EP2005/012113
(87) Internationale Veröffentlichungsnummer: WO 2006/056326

(56) Entgegenhaltungen:
- EP-A- 0 288 779
- EP-A- 1 286 088
- EP-A- 1 333 201
- DE-A1- 10 128 854
- DE-A1- 10 344 106
- DE-A1- 19 924 335
- FR-A- 2 798 444
- US-A- 5 966 989

## Beschreibung

Die vorliegende Erfindung betrifft eine Aktuatoranordnung bzw. Schaltungsvorrichtung für ein Doppelkupplungsgetriebe, das ein erstes und ein zweites Teilgetriebe aufweist, wobei das erste Teilgetriebe ungerade Vorwärtsgangstufen beinhaltet und wobei das zweite Teilgetriebe gerade Vorwärtsgangstufen beinhaltet, mit wenigstens einer ersten und einer zweiten Schaltwalze, die jeweils einen steuerbaren Antriebsmotor und wenigstens eine Steuerkurve aufweisen, wobei jeder Steuerkurve wenigstens ein Kurvenfolger zugeordnet ist, wobei die Kurvenfolger jeweils mit einer Schaltmuffe eines zugeordneten Schaltkupplungspaketes verbindbar sind, um Gangstufen des Doppelkupplungsgetriebes ein- bzw. auszulegen, wobei die Steuerkurve von wenigstens einer Schaltwalze um wenigstens 360° umläuft, wobei der zugeordnete Antriebsmotor dazu ausgelegt ist, diese Schaltwalze um wenigstens 360° herum anzutreiben, und.wobei die Gangstufen so auf die zwei Schaltwalzen verteilt und so an den Steuerkurven angeordnet sind, dass wenigstens eine direkte Mehrfachschaltung ausführbar ist.

### Stand der Technik:

- Schaltwalzen, die in einem Schaltgetriebe über eine Steuerkurve bzw. Kurvenbahn (Schaltwalzennut) oder einen Wulst einen Gleitstein, eine Rolle oder einen ähnlichen Kurvenfolger und damit eine mit dem Kurvenfolger verbundene Schaltgabel axial bewegen, um einen Gang über eine Schaltkupplung ein- oder auszulegen.
- Schaltwalzensysteme mit einer oder mehreren Schaltwalzen.
- Motorradgetriebe mit Schaltwalzenbetätigung.
- Prinzipieller Aufbau und Funktionsweise eines Doppelkupplungsgetriebes (DKG) bzw. Lastschaltgetriebes, mit zwei Kupplungen und zwei damit verbundenen Teilgetrieben, wobei Übersetzungsstufen und somit einzelne Gänge bzw. Gangstufen des DKG über Festräder und mit der Hilfe von Schaltkupplungen drehformschlüssig verbindbare Losräder realisiert werden können.
- Schaltwalzensysteme mit zwei Schaltwalzen und einer Radsatzanordnung, bei der die geraden Gänge von der einen Walze bedient werden und die ungeraden Gänge von der anderen Walze bedient werden. **(**DE 198 40 621 C2**;** DE 199 20 440 C2**)**
- Schaltwalzen mit umlaufender Nut. **(**DE 199 24 335 A1**)**
- Verwendung von mind. zwei Schaltwalzen für ein Doppelkupplungsgetriebe. **(**EP 1 182 376 A2**;** DE 101 28 854 A1**)**
- Stand der Technik gemäß § 3(2) PatG: DE 103 61 356.0: Schaltwalze mit beweglicher Nutflanke.
- Verwendung von einer Schaltwalze für ein Doppelkupplungsgetriebe. (DE 101 28 854 A1**,** EP 0 831 256 B1**;**DE 30 37 990 A1)
- Schaltwalzensysteme, welche das Überspringen von Gängen (vor allem bei Rückschaltungen) bzw. das Einlegen zweier Gänge zur gleichen Zeit mit Hilfe von axial beweglichen Schaltwalzen, Stellgliedern, kraftbeaufschlagten Weichen, bzw. gesteuerten Weichen oder entsprechenden Nutabschnitten realisieren. (DE 101 28 854 A1**,** DE 196 38 269 A1**,** EP 0 831 256 B1**,** DE 199 24 335 A1**,** DE 195 09 477 A1**,** DE 195 43 645 A1)
- Des Weiteren zeigen die Druckschriften US 5 966 989 und DE 101 28 854 A1 ein gattungsgemäβes automatisches Schaltgetriebe, bei dem die Gangstufen so auf einer Schaltwalze verteilt sind, dass ein Mehrfachschalten möglich ist.

### Nachteile des Standes der Technik

1. Das Überspringen von Gängen bei Mehrfachschaltungen (z.B. 6→3, 5→2), etc.) ist insbesondere in einem Doppelkupplungsgetriebe problematisch. Solche Mehrfachschaltungen sind bei der Verwendung einer Schaltwalzenaktuatorik mit einer Schaltwalze, insbesondere aber auch bei der Verwendung einer Schaltwalzenaktuatorik mit zwei Schaltwalzen und der Trennung, dass die geraden Gänge auf einer Schaltwalze und die ungeraden Gänge auf der anderen Walze liegen, generell nur möglich, wenn dazwischenliegende Gänge "durchfahren" werden, also zusätzlich ein- und ausgelegt werden. Ein "Durchfahren" von Gängen wird notwendig, um anschließende Einfachhochschaltungen gemäß einer sinnvollen Schaltablauflogik zugkraftüberbrückbar ausführen zu können.
Beispiel:

| | |
|---|---|
| Schaltwalze 01 (SCHW_01): R-1-3-5 | Teilgetriebe 1 |
| Schaltwalze 02 (SCHW_02): 2-4-6 | Teilgetriebe 2 |

Falls hierbei eine Zug-Rückschaltung 5-2 direkt ausgeführt werden soll, und zwar mit Zugkraftüberbrückung, also ohne Unterbrechung der Zugkraft, ergibt sich folgendes: Bevor der eigentliche "Gangwechsel" durch Überblenden der Kupplungen, also Momentenübernahme von Teilgetriebe 1 durch Teilgetriebe 2, erfolgen kann, muss auf SCHW_02, welche sich gemäß der Schaltwalzenlogik im 4. Gang oder in Neutral zwischen 4. und 6. Gang oder im 6. Gang befindet, zunächst der 6. Gang ausgelegt und der 4. Gang ein- und ausgelegt oder nur der 4. Gang ausgelegt werden, und anschließend der 2. Gang eingelegt werden.
Erst dann kann die Momentenübernahme stattfinden. Zuletzt muss noch SCHW_01 den 5. Gang auslegen oder sogar zusätzlich den 3. Gang einlegen und eventuell wieder auslegen, um anschließend eine mögliche 2-1 oder 2-3 Schaltung mit Zugkraftüberbrückung direkt ausführen zu können. Die SCHW_01 muss demnach "nachgeführt" werden.
2. Die Gänge sind also im Stand der Technik zueinander nicht direkt frei wählbar, somit kann nicht jeder Fahrerwunsch, bzw. jede Fahrsituation, optimal erfüllt bzw. abgedeckt werden.
Keine direkte Wahlfreiheit bei z.B. Mehrfachrückschaltungen bedeutet einen erheblichen Mehraufwand an Zeit. Somit verzögert sich das z.B. durch eine 5-2 oder 6-3 Schaltung • angeforderte Beschleunigungsvermögen eines Fahrzeuges, da wie beschrieben Gänge zusätzlich geschaltet oder ausgelegt werden müssen bzw. nur eine rein sequentielle Schaltfolge möglich ist.
3. In der Funktionalität ergibt sich somit ein deutlicher Nachteil der Schaltwalzenaktuatorik gegenüber anderen Schaltaktuatoriken, insbesondere einer hydraulischen Schaltaktuatorik mit Einzelstangen, also einer Schalteinheit mit einem Aktuator pro Gangpaar bzw. Schaltmuffe.
4. Ebenso führt das Durchfahren von Gängen bzw. das Nachführen der Gänge zu einer Mehrbelastung der Synchroneinheiten und damit zu einer Verminderung der Lebensdauer.
5. Nur durch eine erhebliche Erhöhung des konstruktiven Aufwands bzw. Erhöhung des Bauraumbedarfs und der Kosten läßt sich auch mit einer Schaltwalzenaktuatorik mit zwei Schaltwalzen nach dem Stand der Technik nur ein Teil der möglichen, zuvor genannten, relevanten, direkten Mehrfachschaltungen ausführen.

Es ist dem gemäß die Aufgabe der Erfindung, eine verbesserte Aktuatoranordnung bzw. ein hiermit ausgerüstetes DKG anzugeben.

Diese Aufgabe wird bei der eingangs genannten Aktuatoranordnung dadurch gelöst, dass wenigstens einer der Schaltwalzen sowohl wenigstens eine gerade als auch wenigstens eine ungerade Vorwärtsausgangsstufe zugeordnet ist.

Die Aufgabe wird ferner durch ein Doppelkupplungsgetriebe mit einer derartigen Aktuatoranordnung gelöst.

Bevorzugte Ausführungsformen sind in den Unteransprüchen angegeben.

Die Erfindung ist realisiert in einer Schaltaktuatorik, bevorzugt mit zwei Schaltwalzen, in Verbindung mit einer speziell auf das Schaltsystem abgestimmten Ganganordnung/Gangpaarung, bevorzugt in einem 6+R Gang Getriebe, also in einem Getriebe mit 7 schaltbaren Gängen.

Dies führt zu einer kostengünstigen, bauraumneutralen Schaltwalzenaktuatorik mit zwei Schaltwalzen, insbesondere für ein 6+R Gang DKG-Getriebe, welche die für ein DKG ausreichende Wahlfreiheit für eine direkte Gangwahl ermöglicht.

Bei einem erfindungsgemäßen Doppelkupplungsgetriebe können somit die entscheidenden, zugkraftüberbrückbaren bzw. zwischenstützbaren Mehrfachrückschaltungen bzw. Mehrfachhochschaltungen direkt, insbesondere ohne zusätzliche Ein- bzw. Auslegevorgänge von Gängen im Getriebe, realisiert werden.

Als besonders wichtige Schaltungen gelten die Mehrfachrückschaltungen 6-3; 5-2; 6-5-2; 6-3-2 bzw.die Mehrfachhochschaltungen 3-6; 2-5; 2-5-6; 2-3-6 (hingegen sind die Schaltungen 4-1 bzw. 1-4 meist aufgrund von Drehzahlbegrenzungen des Motors weniger sinnvoll).

Die erfindungsgemäße Schaltaktuatorik ist nach den genannten Mehrfachschaltungen in der Lage, alle anschließend möglichen Einfachhoch- und Einfachrückschaltungen zugkraftüberbrückbar auszuführen. Die Schaltablauflogik bleibt somit stets erhalten. Gänge müssen nicht nachgeführt werden.

Es ergibt sich insgesamt eine deutliche Erhöhung der Funktionalität bei minimaler Erhöhung der Kosten.

Besonders bevorzugt ist die Realisierung für ein DKG in Front-Quer-Bauweise.

Vorzugsweise wird vorgesehen eine (z.B. federlastgesteuerte) Weiche für die Schaltfunktion des R. Ganges. Hierdurch lässt sich eine besonders bevorzugte Ausführungsform realisieren, bei der der 1. Gang und der R. Gang auf die zwei Teilgetriebe verteilt sind.

Die Weiche kann auch über den 1. Gang, also z.B. über die andere Schaltwalze aktiv gesteuert werden.

Die Schaltwalzen können jeweils als klassische Schaltwalzen, als Kurvenscheiben, aus abgewickeltem Blech, etc. gebildet sein, und zwar mit entsprechender Steuerkurve in Form einer Steuernut, Steuerwulst oder sonstigen Steuerkontur, etc.

Der Kurvenfolger kann als Gleitstein, Rolle, Stift etc. ausgeführt sein.

Die Schaltwalze kann durch alle bekannten Herstellverfahren hergestellt werden, bspw. massiv oder gebaut (mehrteilig) ausgeführt werden.

Die Aktuatoranordnung kann bei uneingeschränkter Funktionalität für ein Getriebe mit 6 oder weniger Gängen realisiert werden. Sie kann mit eingeschränkter Funktionalität auch für ein Getriebe mit 8 oder mehr Gängen realisiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: ein Radsatzschema einer ersten Ausführungsform eines erfindungsgemäßen Doppelkupplungsgetriebes;
- Figur 2: schematische Abwicklungen zweier Schaltwalzen einer ersten Ausführungsform der erfindungsgemäßen Aktuatoranordnung;
- Figur 3: den schematischen Ablauf einer Mehrfachschaltung 6→3 mit der Aktuatoranordnung der Fig. 2;
- Figur 4: den schematischen Ablauf einer Mehrfachschaltung 5→2 mit der Aktuatoranordnung der Fig. 2;
- Figur 5: den schematischen Ablauf einer Mehrfachschaltung 6→5→2 mit der Aktuatoranordnung der Fig. 2;
- Figur 6: den schematischen Ablauf einer Mehrfachschaltung 6→3→2 mit der Aktuatoranordnung der Fig. 2;
- Figur 7: schematische Abwicklungen zweier Schaltwalzen einer zweiten Ausführungsform der erfindungsgemäßen Aktuatoranordnung;
- Figur 8: schematische Abwicklungen zweier Schaltwalzen einer dritten Ausführungsform der erfindungsgemäßen Aktuatoranordnung;
- Figur 9: schematische Abwicklungen zweier Schaltwalzen einer vierten Ausführungsform der erfindungsgemäßen Aktuatoranordnung, die in dem Doppelkupplungsgetriebe der Fig. 1 realisiert ist;
- Figur 10: den schematischen Ablauf einer Schaltung N→3 mit der Aktuatoranordnung der Fig. 9;
- Figur 11: den schematischen Ablauf einer Schaltung 3→R mit der Aktuatoranordnung der Fig. 9;
- Figur 12: den schematischen Ablauf einer Schaltung N→3→N mit einer modifizierten Ausführungsform der Aktuatoranordnung der Fig. 9, wobei eine Weiche für die Rück-
- •: wärtsgangstufe über ein Koppelglied aktiv ansteuerbar ist; und
- Figur 13: den schematischen Ablauf einer Schaltung N→R mit der modifizierten Ausführungsform der Aktuatoranordnung der Fig. 9.

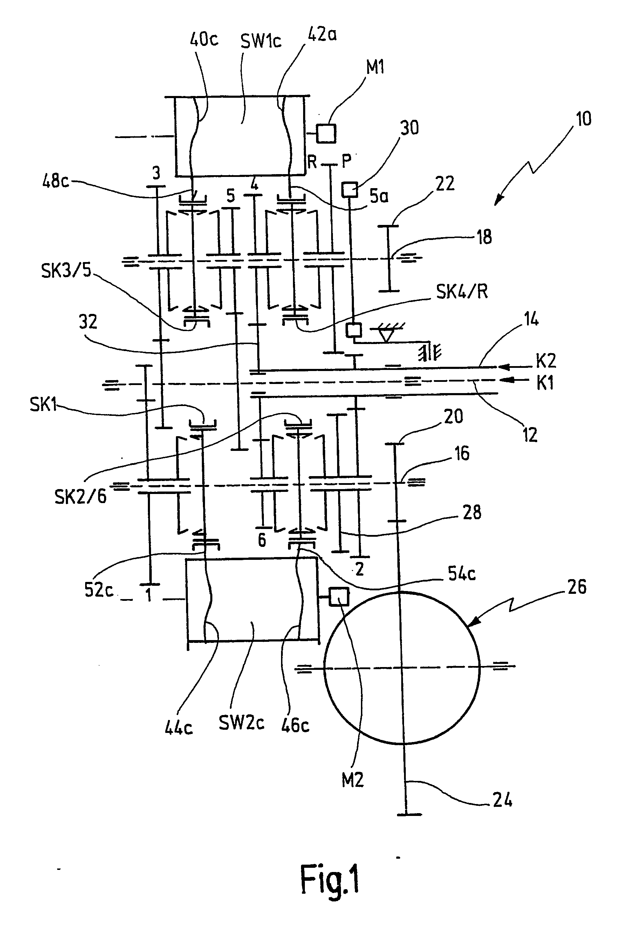

In Figur 1 ist eine erste Ausführungsform eines erfindungsgemäßen Doppelkupplungsgetriebes generell mit 10 bezeichnet.

Das Doppelkupplungsgetriebe 10 weist eine erste Antriebswelle 12 und eine zweite Antriebswelle 14 auf. Die zweite Antriebswelle 14 ist als Hohlwelle ausgebildet und konzentrisch zu der ersten Antriebswelle 12 angeordnet.

Die erste Antriebswelle 12 ist mit einer ersten Kupplung K1 verbindbar. Die zweite Antriebswelle 14 ist mit einer zweiten Kupplung K2 verbindbar.

Die erste Antriebswelle 12 erstreckt sich über eine größere axiale Entfernung als die zweite Antriebswelle und steht gegenüber dieser vor.

Das Doppelkupplungsgetriebe 10 weist ferner eine erste Abtriebswelle 16 und eine zweite Abtriebswelle 18 auf. Die zwei Abtriebswellen 16, 18 sind jeweils parallel zu den Antriebswellen 12, 14 angeordnet und über einen Abtriebskonstantenradsatz mit einem Differentialantriebsrad 24 eines Differentialgetriebes 26 verbunden.

Genauer gesagt weist der Abtriebskonstantenradsatz ein erstes Abtriebsrad 20 auf, das drehfest mit der ersten Abtriebswelle 16 verbunden ist, und weist ein zweites Abtriebsrad 22 auf, das drehfest mit der zweiten Abtriebswelle 18 verbunden ist.

Die zwei Abtriebsräder 20, 22 sind axial miteinander ausgerichtet und stehen beide mit dem Differentialantriebsrad 24 in Eingriff.

Das Doppelkupplungsgetriebe 10 weist sechs Vorwärtsgangstufen 1-6 und eine Rückwärtsgangstufe R auf. Die ungeraden Vorwärtsgangstufen 1, 3, 5 sind einem ersten Teilgetriebe des Doppelkupplungsgetriebes 10 und somit der ersten Kupplung K1 zugeordnet.

Die geraden Vorwärtsgangstufen 2, 4, 6 und die Rückwärtsgangstufe R sind einem zweiten Teilgetriebe des Doppelkupplungsgetriebes 10 und somit der zweiten Kupplung K2 zugeordnet.

Die Vorwärtsgangstufen 1, 2 und 6 sind der ersten Abtriebswelle 16 zugeordnet. Die Vorwärtsgangstufen 3, 4 und 5 und die Rückwärtsgangstufe R sind der zweiten Abtriebswelle 18 zugeordnet.

Ein Schaltkupplungspaket SK1 mit einer Schaltkupplung ist an der ersten Abtriebswelle 16 gelagert und der Vorwärtsgangstufe 1 zugeordnet. Ein Schaltkupplungspaket SK2/6 mit zwei Schaltkupplungen ist den Vorwärtsgangstufen 2, 6 zugeordnet. Entsprechend sind ein Schaltkupplungspaket SK3/5 mit zwei Schaltkupplungen den Vorwärtsgangstufen 3, 5 und ein Schaltkupplungspaket SK4/R den Gangstufen 4, R zugeordnet.

Die in den Schaltkupplungspaketen SK realisierten Schaltkupplungen sind beispielsweise als herkömmliche Synchronkupplungen ausgebildet.

An der ersten Abtriebswelle 16 sind in dieser Reihenfolge ausgehend vom Getriebeeingang aus angeordnet: erstes Abtriebsrad 20, Losrad für Vorwärtsgangstufe 2, ein Drehrichtungsumkehrrad 28 für die Rückwärtsgangstufe R, Schaltkupplungspaket SK2/6, Losrad für Vorwärtsgangstufe 6, Schaltkupplungspaket SK1, Losrad für Vorwärtsgangstufe 1.

Entsprechend sind an der zweiten Abtriebswelle 18 ausgehend von dem Getriebeeingang in dieser Reihenfolge angeordnet: zweites Abtriebsrad 22, eine Parksperre 30, Losrad der Rückwärtsgangstufe R, Schaltkupplungspaket SK4/R, Losrad für die Vorwärtsgangstufe 4, Losrad für die Vorwärtsgangstufe 5, Schaltkupplungspaket 3/5, Losrad für die Vorwärtsgangstufe 3.

Das Drehrichtungsumkehrrad 28 und das Losrad für die Vorwärtsgangstufe 2 sind drehfest miteinander verbunden. Das Drehrichtungsumkehrrad 28 ist axial mit dem Losrad der Rückwärtsgangstufe R an der zweiten Abtriebswelle 18 ausgerichtet. Entsprechend ist die Parksperre 30 axial mit dem Losrad für die zweite Vorwärtsgangstufe 2 an der ersten Abtriebswelle 16 ausgerichtet.

Ferner sind die Losräder der Vorwärtsgangstufen 4, 6 axial miteinander ausgerichtet und kämmen mit einem gemeinsamen Festrad 32. Mit anderen Worten wird eine Doppelverwendung der Vorwärtsgangstufen 4, 6 realisiert.

Bei dem Differentialgetriebe 10 liegen die Vorwärtsgangstufe 1 und der Rückwärtsgang R auf verschiedenen Teilgetrieben und sind somit verschiedenen Kopplungen K1 bzw. K2 zugeordnet.

Die Rückwärtsgangstufe R wird über das Drehrichtungsumkehrrad 28 der Vorwärtsgangstufe 2 getrieben, also sozusagen über den gestuften zweiten Gang. Dabei kann eine Übersetzung ähnlich jener des ersten Ganges realisiert werden.

Die Parksperre 30 ist gegenüberliegend dem Losrad bzw. Schaltrad der Vorwärtsgangstufe 2 angebracht.

Es wird eine Doppelverwendung realisiert. Die Vorwärtsgangstufen 1, 2 befinden sich auf einer Abtriebswelle, der Abtriebswelle 16. Insgesamt sind vier Synchrorikupplungspakte SK vorhanden.

Die Vorwärtsgangstufe 1 liegt auf der Abtriebswelle 16 mit kurzem Achsabstand. Die Gangstufen mit großem Schaltrad- bzw. Losraddurchmesser (vorliegend die Gangstufen 1 und 2 an der Abtriebswelle 16 bzw. die Gangstufen 3 und R an der Abtriebswelle 18) sind axial außen angeordnet, so dass eine Aktuatorik mit zwei Schaltwalzen SW1c, SW2c, wie unten beschrieben, dazwischen radial nahe an den Abtriebswellen 16, 18 angeordnet werden kann.

Das Doppelkupplungsgetriebe 10 ist als automatisiertes Getriebe ausgeführt. Die Schaltkupplungspakete SK sind mit den zwei Schaltwalzen SW1c, SW2c verbunden. Entsprechend werden auch die Kupplungen K1 und K2 automatisiert betätigt.

Die erfindungsgemäße Aktuatoranordnung für das Doppelkupplungsgetrieb 10 weist eine erste Schaltwalze SW1c auf, die zwischen den Losrädern der Gangstufen 3, R an der zweiten Abtriebswelle 18 angeordnet ist, und weist eine zweite Schaltwalze SW2c auf, die zwischen den Losrädern der Gangstufen 1, 2 an der ersten Abtriebswelle 16 angeordnet ist. Die Schaltwalzen SW1c, SW2c sind parallel zu den Wellen 16, 18 gelagert und sind von schematisch angedeuteten Motoren, insbesondere Elektromotoren M1 bzw. M2 angetrieben.

An der ersten Schaltwalze SW1c sind eine erste Steuerkurve 40c, in die ein erster Kurvenfolger 48c greift, sowie eine zweite Steuerkurve 42c angeordnet, in die ein zweiter Kurvenfolger 50c greift.

An der zweiten Schaltwalze SW2c sind eine dritte Steuerkurve 44c, in die ein dritter Kurvenfolger 52c greift, sowie eine vierte Steuerkurve 46c angeordnet, in die ein vierter Kurvenfolger 54c greift.

Der Kurvenfolger 48c ist mit einer Schaltmuffe gekoppelt, die das Schaltkupplungspaket SK3/5 bedient. Der Kurvenfolger 50c ist mit einer Schaltmuffe gekoppelt, die das Schaltkupplungspaket SK4/R bedient. Der Kurvenfolger 52c ist mit einer Schaltmuffe gekoppelt, die das Schaltkupplungspaket SK1 bedient. Der Kurvenfolger 54c ist mit einer Schaltmuffe gekoppelt, die das Schaltkupplungspaket SK2/6 bedient.

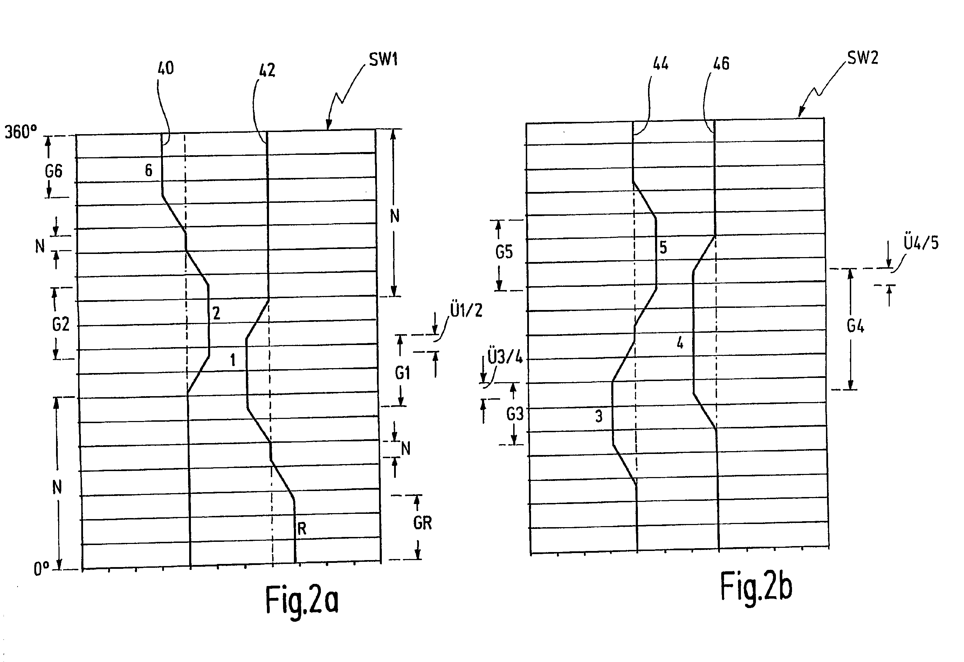

Fig. 2 zeigt die Abwicklungen von zwei Schaltwalzen SW1, SW2, die einem alternativen Doppelkupplungsgetriebe zugeordnet werden können, bei dem einer Abtriebswelle die Gangstufen 1, 2, 6, R und der anderen Abtriebswelle die Gangstufen 3, 4, 5 zugeordnet sind.

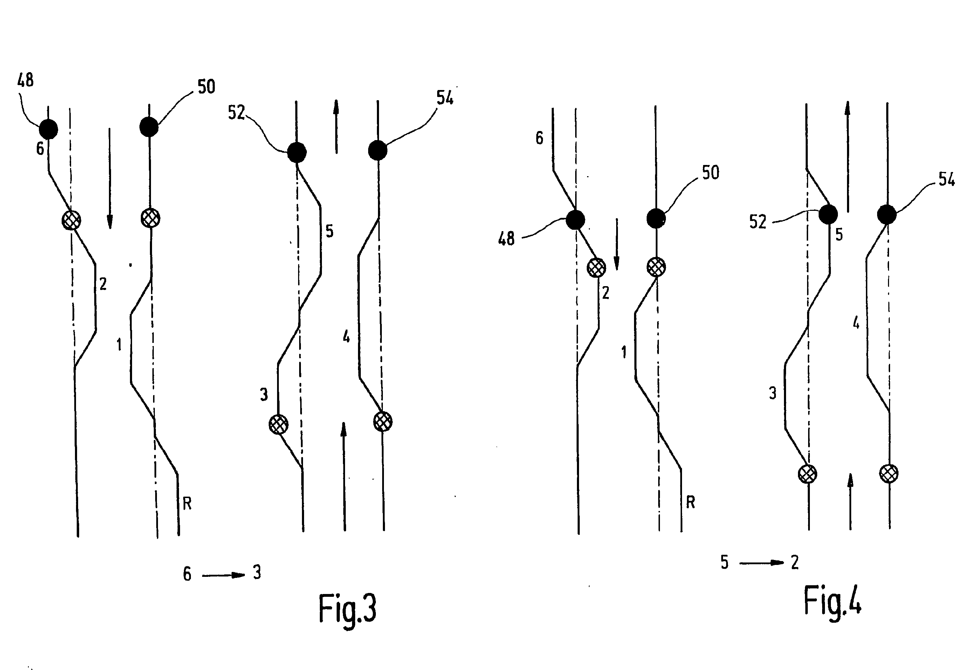

Fig. 3 - 6 zeigen typische Schaltabläufe mit den Schaltwalzen der Fig. 2, wie folgt:

Zur Veranschaulichung werden die Positionen der Kurvenfolger 48-54 (z.B. Gleitsteine) betrachtet, die sich beim Verdrehen der Schaltwalzen SW1, SW2 ergeben würden.

Es wird von folgendem Zustand ausgegangen: Ein "Startgang" ist eingelegt und ein anderer "Zielgang" wird zusätzlich eingelegt. Nach erfolgter Überblendung der Kupplungen K1, K2 bleibt der Zielgang in Schaltstellung und der Startgang wird in Neutral ausgelegt.

Diese Positionen sind nur als Beispiele zu verstehen, da je nach Schaltstrategie ein entsprechender Zielgang bereits vorgewählt sein kann oder ein anderer Zielgang schon vorgewählt ist, der dann zuerst ausgelegt werden muss, bzw. ein entsprechender Startgang nach dem Überblenden der Kupplungen nicht ausgelegt wird. Die Realisierbarkeit der Schaltungen gemäß der Erfindung bleibt aber stets erhalten.

Die Schaltfolge kann sinngemäß auf die, je nach Schaltstrategie, verschiedenen Gangpositionen zu Beginn des Schaltwunsches übertragen werden.

In den Fig. 3 - 6 zeigen ein Vollpunkt: mögliche Startpositionen; ein karierter Punkt: mögliche Zielpositionen; und ein gestreifter Punkt: eine Zwischenstellung.

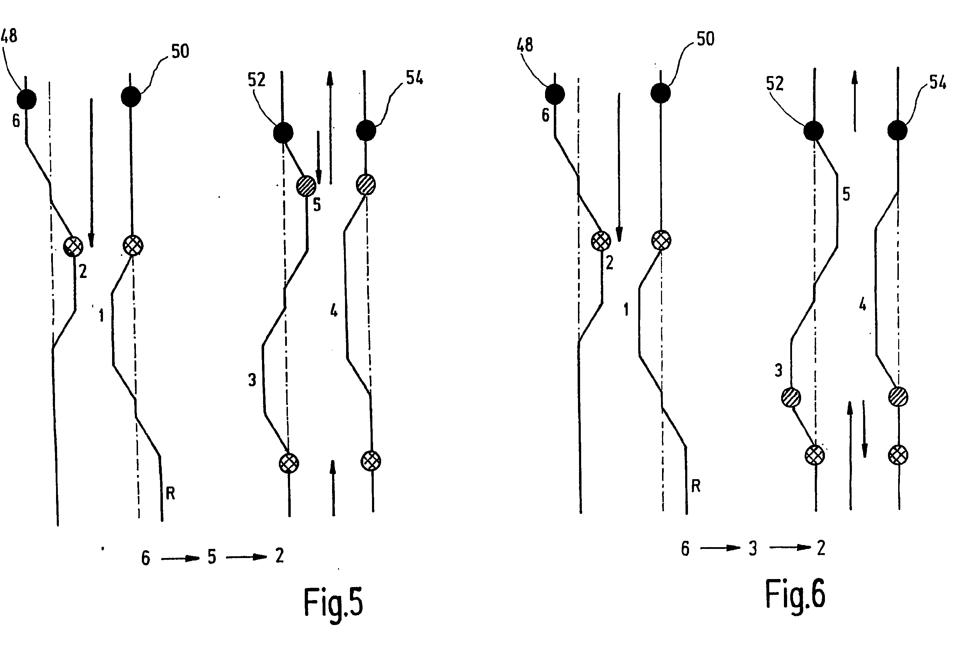

Wie dargestellt, lassen sich Mehrfachrückschaltungen erfindungsgemäß direkt durchführen, insbesondere, ohne einen Zwischengang einlegen zu müssen. Die Beispiele der Fig. 5 und 6 zeigen dabei Situationen, bei denen zunächst unter Zug (z.B. bei KickDown) moderat zurückgeschaltet wird, und dann (bspw. durch fortgesetzten KickDown) noch weiter zurückgeschaltet wird bzw. über einen Zwischengang ohne Zugkraftunterbrechung direkt zurückgeschaltet wird.

Sämtliche Abläufe sind reversibel. Die Mehrfachhochschaltungen 2-5; 3-6; 2-3-6; 2-5-6 sind damit auch direkt ausführbar. Sämtliche Abläufe sind in ihrer Grundlogik auf alle beschriebenen Ausführungen anwendbar. Mindestens eine Schaltwalze dreht dabei immer mehr wie 360°.

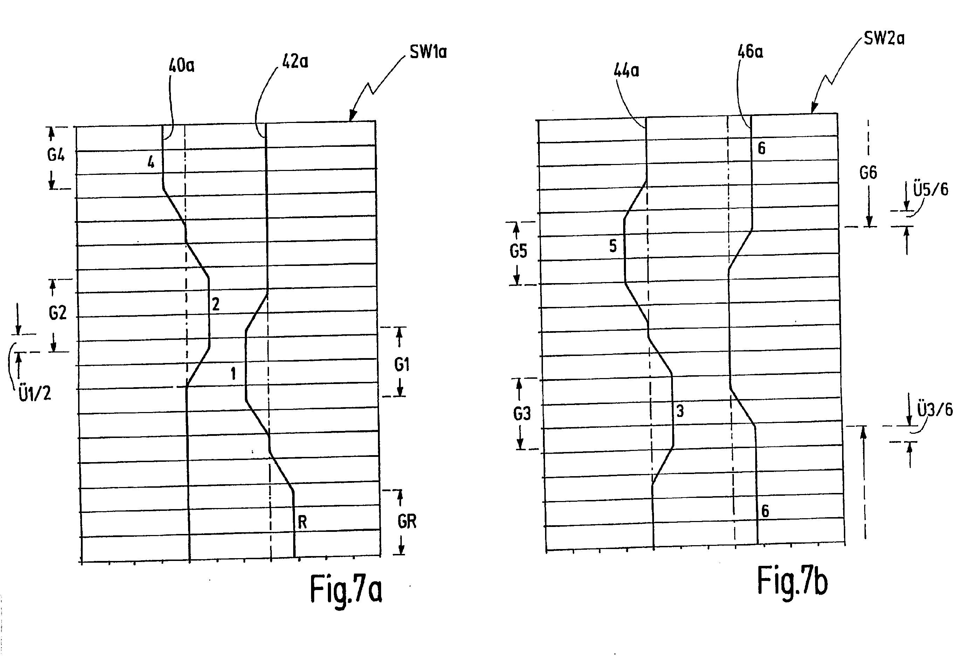

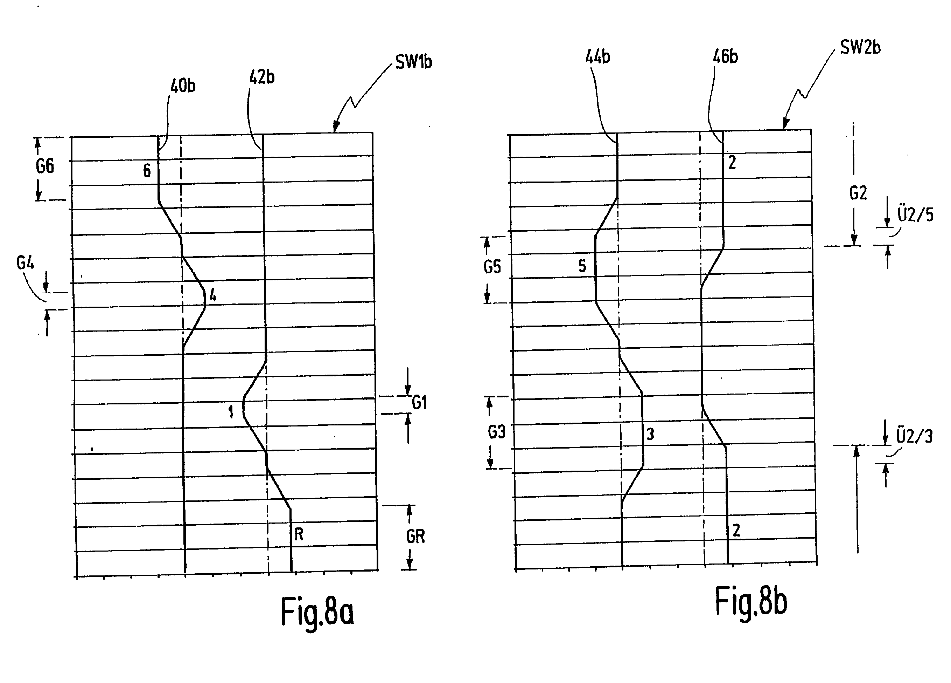

Fig. 7 und 8 zeigen alternative Ausführungsformen.

Generell ist die Schaltaktuatorik über alle Getriebearten einsetzbar. Vorteilhaft ist die Anwendung in Front-Quer-Getrieben. Vorteilhaft ist insbesondere die Anwendung in Front-Quergetrieben in 3-Wellen-Design. Besonders vorteilhaft ist die Anwendung in Front-Quer-Getrieben in 3 -Wellen-Design und einer achsparallelen Anordnung der Schaltvorrichtungen/Schaltwalzen zu den Abtriebswellen. Hierbei lässt sich eine optimale Adaption der Schaltvorrichtung an den Radsatz und somit ein optimales Getriebepackage realisieren.

Die Möglichkeit direkte Mehrfachschaltungen mit einem Schaltwalzensystem mit zwei Schaltwalzen durchzuführen, wird durch wenigstens einen, vorzugsweise durch eine Kombination der folgenden Punkte realisiert:
- Schaltwalzensystem mit zwei Schaltwalzen, mit mindestens einer Schaltwalze, die eine umlaufende Nut besitzt;
- Wenigstens eine Schaltwalze ist um 360° drehbar;
- Aufhebung der Trennung gerade/ungerade Gänge bzgl. der Schaltwalzen;
- 1/R liegen auf einer Schaltmuffe;
- Überschneidungsbereiche Ü in den Steuerkurven der Schaltwalzen ermöglichen es, mit nur einer Schaltwalze zwei aufeinanderfolgende Gänge im Sinne des Grundgedankens eines Doppelkupplungsgetriebes (Zugkraftüberbrückung) zu betätigen und einen Zustand zu erzeugen, bei dem die beiden Gänge gleichzeitig eingelegt sind.

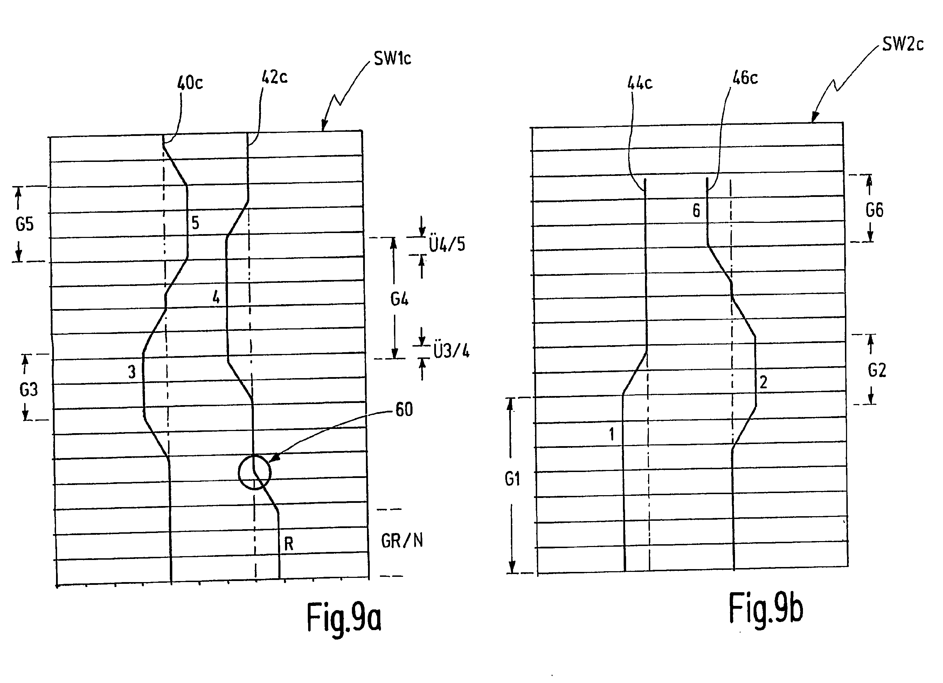

Fig. 9 zeigt eine besonders bevorzugte Ausführungsform einer Aktuatoranordnung mit zwei Schaltwalzen SW1c, SW2c, die insbesondere für das Doppelkupplungsgetriebe 10 der Fig. 1 verwendbar ist. Generell ist die Funktionsweise vergleichbar zu den Aktuatoranordnungen der Fig. 2, 7 und 8. Im folgenden wird im wesentlichen auf die Unterschiede hierzu eingegangen.

Zum einen liegen der 1. Gang und der R. Gang nicht auf einer Synchroneinheit/Schaltmuffe. Ferner werden der 1. Gang und R. Gang auch nicht über eine Schaltwalzennut bzw. einen Kurvenfolger gesteuert.

Die Schaltwalze SW1c ist mit umlaufenden Steuerkurven 40c, 42c für die Gänge 3,5 bzw. 4, R ausgebildet. Ferner ist die Steuerkurve 42c mit einer Weiche 60 ausgestattet, und zwar für das Schalten bzw. Überspringen des R. Ganges.

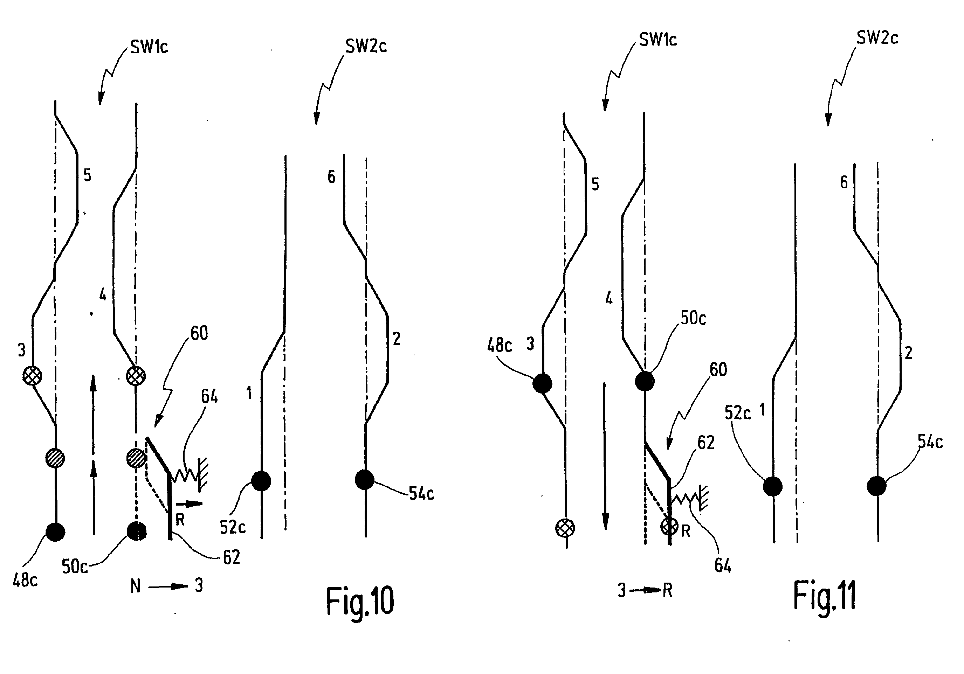

Die Ausführung bzw. Betätigung der Weiche 60 kann prinzipiell einer beweglichen Schaltwalzennutflanke 62 (vgl. Fig. 10, 11), speziell einer Schaltwalzeneinlegenutflanke entsprechen.

Die Steuerung der Weiche 60 kann über eine Hilfsenergie, bevorzugt über eine Federkraft (Feder 64) erfolgen.

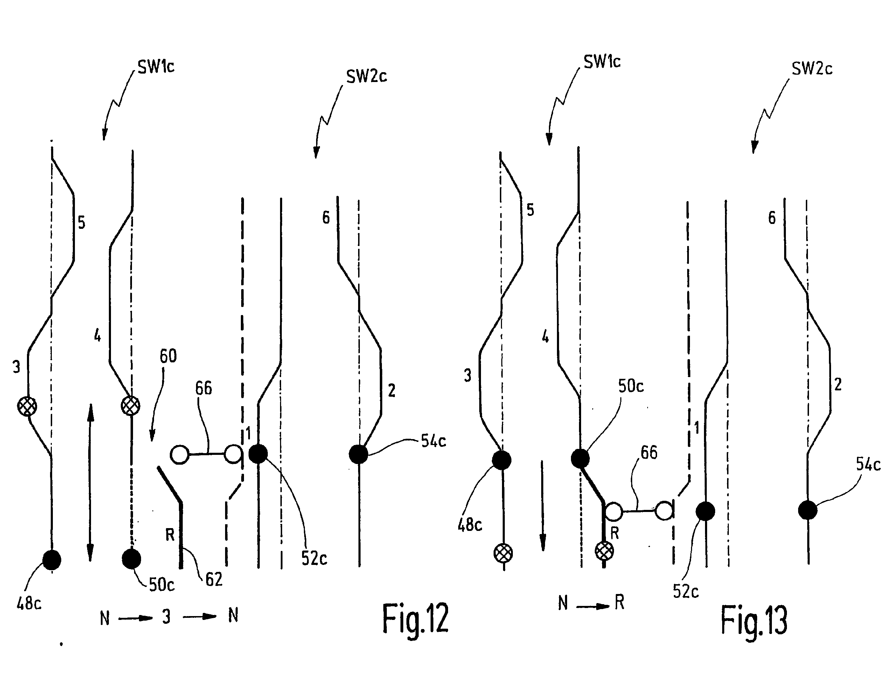

Alternativ erfolgt eine aktive Steuerung der Weiche 60 (vgl. Fig. 12, 13), bspw. über die andere Schaltwalze SW2c. Im dargestellten Fall erfolgt die aktive Ansteuerung über eine Kopplung (Koppelglied 66) der Gangstellung des 1. Ganges.

Die Variante der Fig. 9 - 13 ist trotz der erhöhten Komplexität in der Schaltung bevorzugt, da sich mit dem dazugehörigen Radsatzaufbau die Anforderungen an den Radsatz, wie Bauraum, Kosten, Übersetzungsanforderungen, Variabilität, aber auch die Forderung nach einem kompakten Schaltungspackage, wesentlich einfacher erfüllen lassen.

Durch die Einführung einer Weiche 60 auf der Schaltwalze SW1c mit der umlaufenden Nut, besitzt auch diese einen Anschlag für den R. Gang, über ein Nutende oder über die Blockade durch die Weiche 60 selbst. Somit sind beide Walzen auch für eine Software basierende Steuerung referenzierbar.

Die Schaltablauflogik mit passiver (federkraftgesteuerter) Weichenfunktion ist in Fig. 10, 11 dargestellt.

Ein Weiterdrehen der Schaltwalze SW1c über 360° ist möglich. Die Weiche 60 wird beim Auftreffen des Kurvenfolgers 50c (Gleitsteins), z.B. über eine Schräge, gegen die beaufschlagte Federkraft ausgelenkt und damit umgangen.

Bei Drehrichtung in Richtung R wird der Kurvenfolger 50c durch die Weiche 60 ausgelenkt, da diese über die Federkraft in der Grundstellung (Schalten von R möglich) gehalten wird.

Der R. Gang kann somit unabhängig von der anderen Schaltwalze SW2c drehrichtungsabhängig eingelegt werden.

Mehrfachhochschaltungen sind somit in der Regel nicht möglich.

Eine Erweiterung der Schaltablauflogik erfolgt mit integrierter, aktiv über Schaltwalze SW2c gesteuerter Weichenfunktion (Fig. 12, 13).

Ein Weiterdrehen der Schaltwalze SW1c über 360° ist möglich. Die Weiche 60 wird umgangen.

Bei Drehrichtung der Schaltwalze SW1c in Richtung R wird dieser nicht eingelegt, solange über die Abhängigkeit mit Schaltwalze SW2c, z.B. über den eingelegten 1. Gang, die Weiche 60 nicht aktiviert wurde. Somit kann eine Bewegung der Schaltwalze unter 0° hinaus erfolgen. Auch Mehrfachhochschaltungen sind möglich.

Nur in Bewegungsrichtung der Walze 60 in Richtung R. Gang und gleichzeitiger Aktivierung der Weiche 60 über Schaltwalze SW2c, z.B. durch den eingelegten 1.Gang, ist es möglich, den R. Gang einzulegen.

Damit lassen sich der 1. und der R. Gang zur gleichen Zeit, auf verschiedenen Teilgetrieben einlegen. Ein Anfahren in Vorwärts oder Rückwärtsrichtung kann im Wechsel (z.B. Rangieren, Herausschaukeln bei festsitzendem Fahrzeug) ohne Gangwechsel und somit in zeitlich schneller Abfolge erfolgen, da nur die entsprechende Kupplung des Teilgetriebes aktiviert werden muss. Der Wechsel der Fahrtrichtung erfolgt somit nur über den Wechsel der Kupplungen K1, K2.

## Patentansprüche

1. Aktuatoranordnung für ein Doppelkupplungsgetriebe (10), das ein erstes und ein zweites Teilgetriebe aufweist, wobei das erste Teilgetriebe ungerade Vorwärtsgangstufen (1, 3, 5) beinhaltet und wobei das zweite Teilgetriebe gerade Vorwärtsgangstufen (2, 4, 6) beinhaltet, mit wenigstens einer ersten und einer zweiten Schaltwalze (SW1, SW2), die jeweils einen steuerbaren Antriebsmotor (M1, M2) und wenigstens eine Steuerkurve (40, 42, 44, 46) aufweisen, wobei jeder Steuerkurve (40, 42, 44, 46) wenigstens ein Kurvenfolger (48, 50, 52, 54) zugeordnet ist, wobei die Kurvenfolger (48, 50, 52, 54) jeweils mit einer Schaltmuffe eines zugeordneten Schaltkupplungspaketes (SK) verbindbar sind, um Gangstufen (1-6, R) des Doppelkupplungsgetriebes (10) ein- bzw. auszulegen, wobei die Steuerkurve (44, 46; 40c, 42c) von wenigstens einer Schaltwalze (SW2; SW1c) um wenigstens 360° umläuft, wobei der zugeordnete Antriebsmotor (M1; M2) dazu ausgelegt ist, diese Schaltwalze (SW2; SW1c) um wenigstens 360° herum anzutreiben, und wobei die Gangstufen (1-6, R) so auf die zwei Schaltwalzen (SW1, SW2) verteilt und so an den Steuerkurven (40, 42, 44, 46) angeordnet sind, dass wenigstens eine direkte Mehrfachschaltung (6-3; 5-2) ausführbar ist,
**dadurch gekennzeichnet, dass**
wenigstens einer der Schaltwalzen (SW1, SW2) sowohl wenigstens eine gerade (2, 4, 6) als auch wenigstens eine ungerade (1, 3, 5) Vorwärtsgangstufe zugeordnet ist.

2. Aktuatoranordnung nach Anspruch 1, **dadurch gekennzeichnet, dass** die Steuerkurven (40-46) jeweils wenigstens einen Gang-Umfangsabschnitt (G) und wenigstens einen Neutral-Umfangsabschnitt (N) aufweisen, wobei eine Gangstufe (1-6, R) eingelegt ist, wenn sich ein zugeordneter Kurvenfolger (48-54) in dem Gang-Umfangsabschnitt (G) befindet, und wobei keine der Steuerkurve (40-46) zugeordnete Gangstufe (1-6, R) eingelegt ist, wenn sich der Kurvenfolger (48-54) in dem Neutral-Umfangsabschnitt (N) befindet.

3. Aktuatoranordnung nach Anspruch 2, **dadurch gekennzeichnet, dass** wenigstens eine der Schaltwalzen (SW1, SW2) zwei Steuerkurven (40, 42 bzw. 44, 46) aufweist, wobei sich ein Gang-Umfangsabschnitt (G) der einen Steuerkurve und ein Gang-Umfangsabschnitt (G) der zweiten Steuerkurve in einem Überlappungs-Umfangsabschnitt (Ü) teilweise überlappen.

4. Aktuatoranordnung nach einem der Ansprüche 1 - 3, **dadurch gekennzeichnet, dass** die Gangstufen (1, R) für den ersten Gang und den Rückwärtsgang einer Steuerkurve (42) zugeordnet sind.

5. Aktuatoranordnung nach einem der Ansprüche 1 - 4, **dadurch gekennzeichnet, dass** die Gangstufen (1, R) für den ersten Gang und den Rückwärtsgang in einem der zwei Teilgetriebe enthalten sind.

6. Aktuatoranordnung nach Anspruch 4 oder 5, **dadurch gekennzeichnet, dass** ein Gang-Umfangsabschnitt (GR) für den Rückwärtsgang einer Schaltwalze (SW1) zugeordnet ist, deren Drehbarkeit auf 360° oder weniger begrenzt ist.

7. Aktuatoranordnung nach einem der Ansprüche 1 - 6, **dadurch gekennzeichnet, dass**.der einen Schaltwalze (SW1) die Gangstufen (1, 2, 6, R) für den ersten, den zweiten, den sechsten und den Rückwärtsgang zugeordnet sind.

8. Aktuatoranordnung nach einem der Ansprüche 1 - 6, **dadurch gekennzeichnet, dass** der einen Schaltwalze (SW1) die Gangstufen (1, 2, 4, R) für den ersten, den zweiten, den vierten und den Rückwärtsgang zugeordnet sind.

9. Aktuatoranordnung nach einem der Ansprüche 1 - 6, **dadurch gekennzeichnet, dass** der einen Schaltwalze (SW1) die Gangstufen (1, 4, 6, R) für den ersten, den vierten, den sechsten und den Rückwärtsgang zugeordnet sind.

10. Aktuatoranordnung nach einem der Ansprüche 1 - 9, **dadurch gekennzeichnet, dass** die Steuerkurven unverzweigt sind.

11. Aktuatoranordnung nach einem der Ansprüche 1 - 3, **dadurch gekennzeichnet, dass** die Gangstufen (1, R) für den ersten Gang und den Rückwärtsgang verschiedenen Steuerkurven (44c, 42c) zugeordnet sind.

12. Aktuatoranordnung nach einem der Ansprüche 1 - 3 oder 11, **dadurch gekennzeichnet, dass** die Gangstufen (1, R) für den 1. Gang und den Rückwärtsgang in verschiedenen Teilgetrieben enthalten sind.

13. Aktuatoranordnung nach Anspruch 11 oder 12, **dadurch gekennzeichnet, dass** die Gangstufe (R) für den Rückwärtsgang der Schaltwalze (SW1c) zugeordnet ist, die um wenigstens 360° umläuft.

14. Aktuatoranordnung nach einem der Ansprüche 11 - 13, **dadurch gekennzeichnet, dass** ein Gang-Umfangsabschnitt (GR) des Rückwärtsganges für den Kurvenfolger (50c) in nur einer Drehrichtung über eine Weiche (60) der zugeordneten Steuerkurve (42c) erreichbar ist.

15. Aktuatoranordnung nach Anspruch 14, **dadurch gekennzeichnet, dass** die Weiche (60) in der entgegengesetzten Drehrichtung mittels des Kurvenfolgers (50c) in eine Öffnungsstellung auslenkbar ist.

16. Aktuatoranordnung nach Anspruch 15, **dadurch gekennzeichnet, dass** die Weiche (60) in die Schließstellung vorgespannt ist, vorzugsweise mittels einer Feder (64).

17. Aktuatoranordnung nach Anspruch 14, **dadurch gekennzeichnet, dass** die Weiche (60) über ein Koppelglied (66) auslenkbar ist.

18. Aktuatoranordnung nach Anspruch 17, **dadurch gekennzeichnet, dass** das Koppelglied (66) mit der anderen Schaltwalze (SW2c) verbunden ist und dass die Weiche (60) mittels des Koppelgliedes (66) in eine Schließstellung ausgelenkt ist, wenn bei der anderen Schaltwalze (SW2c) die Gangstufe (1) für den ersten Gang eingelegt ist.

19. Aktuatoranordnung nach einem der Ansprüche 1 - 18, **dadurch gekennzeichnet, dass** die Schaltwalzen (SW1, SW2) axial unverschieblich gelagert sind.

20. Doppelkupplungsgetriebe (10) mit einer Aktuatoranordnung nach einem der Ansprüche 1 - 19.

21. Doppelkupplungsgetriebe nach Anspruch 20, wobei die erste Gangstufe und die zweite Gangstufe verschiedenen Teilgetrieben zugeordnet sind.

## Claims

1. An actuator arrangement for a twin-clutch transmission (10) which has a first and a second partial transmission, with the first partial transmission containing odd forward gear stages (1, 3, 5) and with the second partial transmission containing even forward gear stages (2, 4, 6), having at least one first and one second selector drum (SW1, SW2) which have in each case one controllable drive motor (M1, M2) and at least one control cam (40, 42, 44, 46), with each control cam (40, 42, 44, 46) being assigned at least one cam follower (48, 50, 52, 54), with it being possible for the cam followers (48, 50, 52, 54) to be connected in each case to a selector sleeve of an associated shift clutch pack (SK) in order to engage and disengage gear stages (1-6, R) of the twin-clutch transmission (10), wherein the control cam (44, 46; 40c, 42c) of at least one selector drum (SW2; SW1c) encircles through at least 360°, wherein the associated drive motor (M1; M2) is designed to drive said selector drum (SW2; SW1c) through at least 360°, and wherein the gear stages (1-6, R) are distributed on the two selector drums (SW1, SW2), and arranged on the control cams (40, 42, 44, 46), in such a way that at least one direct multiple shift (6-3; 5-2) can be carried out,
**characterized in that** at least one of the selector drums (SW1, SW2) is assigned both at least one even (2, 4, 6) and at least one odd (1, 3, 5) forward gear stage.

2. The actuator arrangement as claimed in claim 1, **characterized in that** the control cams (40-46) have in each case at least one gear peripheral section (G) and at least one neutral peripheral section (N), with a gear stage (1-6, R) being engaged when an associated cam follower (48-54) is situated in the gear peripheral section (G), and with none of the gear stages (1-6, R) which are assigned to the control cam (40-46) being engaged when the cam follower (48-54) is situated in the neutral peripheral section (N).

3. The actuator arrangement as claimed in claim 2, **characterized in that** at least one of the selector drums (SW1, SW2) has two control cams (40, 42 and 44, 46), with a gear peripheral section (G) of the one control cam and a gear peripheral section (G) of the second control cam partially overlapping in an overlapping peripheral section (Ü).

4. The actuator arrangement as claimed in one of claims 1 - 3, **characterized in that** the gear stages (1, R) for the first gear and the reverse gear are assigned to one control cam (42).

5. The actuator arrangement as claimed in one of claims 1 - 4, **characterized in that** the gear stages (1, R) for the first gear and the reverse gear are contained in one of the two partial transmissions.

6. The actuator arrangement as claimed in claim 4 or 5, **characterized in that** a gear peripheral section (GR) for the reverse gear is assigned to a selector drum (SW1) whose range of rotation is limited to 360° or less.

7. The actuator arrangement as claimed in one of claims 1 - 6, **characterized in that** the one selector drum (SW1) is assigned the gear stages (1, 2, 6, R) for the first, the second, the sixth and the reverse gear.

8. The actuator arrangement as claimed in one of claims 1 - 6, **characterized in that** the one selector drum (SW1) is assigned the gear stages (1, 2, 4, R) for the first, the second, the fourth and the reverse gear.

9. The actuator arrangement as claimed in one of claims 1 - 6, **characterized in that** the one selector drum (SW1) is assigned the gear stages (1, 4, 6, R) for the first, the fourth, the sixth and the reverse gear.

10. The actuator arrangement as claimed in one of claims 1 - 9, **characterized in that** the control cams do not branch.

11. The actuator arrangement as claimed in one of claims 1 - 3, **characterized in that** the gear stages (1, R) for the first gear and the reverse gear are assigned to different control cams (44c, 42c).

12. The actuator arrangement as claimed in one of claims 1 - 3 or 11, **characterized in that** the gear stages (1, R) for the 1^{st} gear and the reverse gear are contained in different partial transmissions.

13. The actuator arrangement as claimed in claim 11 or 12, **characterized in that** the gear stage (R) for the reverse gear is assigned to the selector drum (SW1c) which encircles through at least 360°.

14. The actuator arrangement as claimed in one of claims 11 - 13, **characterized in that** a gear peripheral section (GR) of the reverse gear can be reached by the cam follower (50c) in only one rotational direction via a switch point (60) of the associated control cam (42c).

15. The actuator arrangement as claimed in claim 14, **characterized in that** the switch point (60) can be deflected into an open position in the opposite rotational direction by means of the cam follower (50c).

16. The actuator arrangement as claimed in claim 15, **characterized in that** the switch point (60) is pre-loaded into the closed position, preferably by means of a spring (64).

17. The actuator arrangement as claimed in claim 14, **characterized in that** the switch point (60) can be deflected by means of a coupling member (66).

18. The actuator arrangement as claimed in claim 17, **characterized in that** the coupling member (66) is connected to the other selector drum (SW2c) and **in that** the switch point (60) is deflected by means of the coupling member (66) into a closed position when, on the other selector drum (SW2c), the gear stage (1) for the first gear is engaged.

19. The actuator arrangement as claimed in one of claims 1 - 18, **characterized in that** the selector drums (SW1, SW2) are mounted so as to be axially non-moveable.

20. A twin-clutch transmission (10) having an actuator arrangement as claimed in one of claims 1 - 19.

21. The twin-clutch transmission as claimed in claim 20, with the first gear stage and the second gear stage being assigned to different partial transmissions.

## Revendications

1. Arrangement actionneur pour une boîte de vitesses à double accouplement (10), laquelle présente une première et une deuxième boîte de vitesses partielle, la première boîte de vitesses partielle contenant les rapports de marche avant impairs (1, 3, 5) et la deuxième boîte de vitesses partielle contenant les rapports de marche avant pairs (2, 4, 6), comprenant au moins un premier et un deuxième cylindre de changement de rapport (SW1, SW2), lesquels présentent respectivement un moteur d'entraînement (M1, M2) commandable et au moins une came de commande (40, 42, 44, 46), au moins un suiveur de came (48, 50, 52, 54) étant associé à chaque came de commande (40, 42, 44, 46), les suiveurs de came (48, 50, 52, 54) pouvant respectivement être reliés avec un manchon de changement de rapport d'un bloc d'accouplement de changement de rapport (SK) associé afin d'engager ou de désengager des rapports (1-6, R) de la boîte de vitesses à double accouplement (10), la came de commande (44, 46 ; 40c, 42c) étant amenée par au moins un cylindre de changement de rapport (SW2 ; SW1c) à effectuer une révolution sur au moins 360°, le moteur d'entraînement (M1 ; M2) associé étant conçu pour entraîner ce cylindre de changement de rapport (SW2 ; SW1c) en une rotation d'au moins 360°, et les rapports (1-6, R) étant distribués sur les deux cylindres de changement de rapport (SW1, SW2) et ainsi disposés sur les cames de commande (40, 42, 44, 46) de telle sorte qu'il est possible de réaliser directement au moins un changement de rapport multiple (6-3 ; 5-2), **caractérisé en ce que**
au moins un rapport de marche avant pair (2, 4, 6) ainsi qu'au moins un rapport de marche avant impair (1, 3, 5) sont associés à au moins l'un des cylindres de changement de rapport (SW1, SW2).

2. Arrangement actionneur selon la revendication 1, **caractérisé en ce que** les cames de commande (40-46) présentent respectivement au moins une portion circonférentielle de rapport (G) et au moins une portion circonférentielle de point mort (N), un rapport (1-6, R) étant engagé lorsqu'un suiveur de came (48-54) associé se trouve dans la portion circonférentielle de rapport (G) et aucun des rapports (1-6, R) associés aux cames de commande (40-46) n'étant engagé lorsque le suiveur de came (48-54) se trouve dans la portion circonférentielle de point mort (N).

3. Arrangement actionneur selon la revendication 2, **caractérisé en ce qu'**au moins l'un des cylindres de changement de rapport (SW1, SW2) présente deux cames de commande (40, 42 ou 44, 46), une portion circonférentielle de rapport (G) de l'une des cames de commande et une portion circonférentielle de rapport (G) de la deuxième came de commande se chevauchant partiellement dans une portion circonférentielle de chevauchement (Ü).

4. Arrangement actionneur selon l'une des revendications 1 à 3, **caractérisé en ce que** les rapports (1, R) pour la première vitesse et la marche arrière sont associés à une came de commande (42).

5. Arrangement actionneur selon l'une des revendications 1 à 4, **caractérisé en ce que** les rapports (1, R) pour la première vitesse et la marche arrière se trouvent dans l'une des deux boîtes de vitesses partielles.

6. Arrangement actionneur selon la revendication 4 ou 5, **caractérisé en ce qu'**une portion circonférentielle de rapport (GR) pour la marche arrière est associée à un cylindre de changement de rapport (SW1) dont l'amplitude de rotation est limitée à 360° ou moins.

7. Arrangement actionneur selon l'une des revendications 1 à 6, **caractérisé en ce qu'**à ce cylindre de changement de rapport (SW1) sont associés les rapports (1, 2, 6, R) pour la première, la deuxième et la sixième vitesse ainsi que la marche arrière.

8. Arrangement actionneur selon l'une des revendications 1 à 6, **caractérisé en ce qu'**à ce cylindre de changement de rapport (SW1) sont associés les rapports (1, 2, 4, R) pour la première, la deuxième et la quatrième vitesse ainsi que la marche arrière.

9. Arrangement actionneur selon l'une des revendications 1 à 6, **caractérisé en ce qu'**à ce cylindre de changement de rapport (SW1) sont associés les rapports (1, 4, 6, R) pour la première, la quatrième et la sixième vitesse ainsi que la marche arrière.

10. Arrangement actionneur selon l'une des revendications 1 à 9, **caractérisé en ce que** les cames de commande sont sans ramifications.

11. Arrangement actionneur selon l'une des revendications 1 à 3, **caractérisé en ce que** des cames de commande (44c, 42c) différentes sont associées aux rapports (1, R) pour la première vitesse et la marche arrière.

12. Arrangement actionneur selon l'une des revendications 1 à 3 ou 11, **caractérisé en ce que** les rapports (1, R) pour la première vitesse et la marche arrière se trouvent dans des boîtes de vitesses partielles différentes.

13. Arrangement actionneur selon la revendication 11 ou 12, **caractérisé en ce que** le rapport (R) pour la marche arrière est associé au cylindre de changement de rapport (SW1c), lequel effectue une révolution sur au moins 360°.

14. Arrangement actionneur selon l'une des revendications 11 à 13, **caractérisé en ce qu'**une portion circonférentielle de rapport (GR) de la marche arrière ne peut être atteinte par le suiveur de came (50c) que dans un seul sens de rotation par le biais d'un dispositif de séparation (60) de la came de commande (42c) associée.

15. Arrangement actionneur selon la revendication 14, **caractérisé en ce que** le dispositif de séparation (60) peut, dans le sens de rotation inverse, être dévié dans une position d'ouverture au moyen du suiveur de came (50c).

16. Arrangement actionneur selon la revendication 15, **caractérisé en ce que** le dispositif de séparation (60) est précontraint dans la position de fermeture, de préférence au moyen d'un ressort (64).

17. Arrangement actionneur selon la revendication 14, **caractérisé en ce que** le dispositif de séparation (60) peut être dévié par le biais d'un élément d'accouplement (66).

18. Arrangement actionneur selon la revendication 17, **caractérisé en ce que** l'élément d'accouplement (66) est relié avec l'autre cylindre de changement de rapport (SW2c) et **en ce que** le dispositif de séparation (60) est dévié au moyen de l'élément d'accouplement (66) dans une position de fermeture lorsque le rapport (1) pour la première vitesse est engagé sur l'autre cylindre de changement de rapport (SW2c).

19. Arrangement actionneur selon l'une des revendications 1 à 18, **caractérisé en ce que** les cylindres de changement de rapport (SW1, SW2) sont logés sans pouvoir effectuer de translation dans le sens axial.

20. Boîte de vitesses à double accouplement (10) comprenant un arrangement actionneur selon l'une des revendications 1 à 19.

21. Boîte de vitesses à double accouplement selon la revendication 20, des boîtes de vitesses partielles différentes étant associées au premier rapport et au deuxième rapport.
